# FASCICULE DE BREVET EUROPEEN

(11) **EP 3 914 748 B1**
(45) Date de publication et mention de la délivrance du brevet: **08.05.2024**
(21) Numéro de dépôt: 20707710.8
(22) Date de dépôt: 24.01.2020
(51) Int. Cl.: C22C 21/06, C22C 21/00, B22F 3/105, B23K 26/342, B33Y 70/00, B33Y 80/00, C22F 1/04, C22F 1/047

(54) **PROCEDE DE FABRICATION D'UNE PIECE EN ALLIAGE D'ALUMINIUM, L'ALLIAGE COMPORTANT AU MOINS DU ZIRCONIUM ET DU MAGNESIUM**
VERFAHREN ZUR HERSTELLUNG EINES BAUTEILS AUS EINER ALUMINIUMLEGIERUNG, WOBEI DIE LEGIERUNG MINDESTENS ZIRKONIUM UND MAGNESIUM ENTHÄLT
METHOD FOR MANUFACTURING A PART FROM ALUMINIUM ALLOY, THE ALLOY COMPRISING AT LEAST ZIRCONIUM AND MAGNESIUM

(30) Priorité: 24.01.2019 FR 1900598
(43) Date de publication de la demande: 01.12.2021
(73) Titulaire: C-TEC CONSTELLIUM TECHNOLOGY CENTER, 38341 Voreppe (FR)
(72) Inventeur: CHEHAB, Bechir, 38500 VOIRON (FR); SHAHANI, Ravi, 38340 VOREPPE (FR)
(74) Mandataire: Constellium - Propriété Industrielle
(86) Numéro de dépôt international: PCT/FR2020/050107
(87) Numéro de publication internationale: WO 2020/152427

(56) Documents cités:
- GRIFFITHS S ET AL: "Effect of laser rescanning on the grain microstructure of a selective laser melted Al-Mg-Zr alloy", MATERIALS CHARACTERIZATION, ELSEVIER, NEW YORK, NY, US, vol. 143, 26 mars 2018 (2018-03-26), pages 34-42, XP085490258, ISSN: 1044-5803, DOI: 10.1016/J.MATCHAR.2018.03.033
- NIU X P ET AL: "Hydride formation in mechanically alloyed Al-Zr and Al-Fe-Zr", SCRIPTA METALLURGICA ET MATERIALIA, PERGAMON PRESS, GB, vol. 30, no. 1, 1 janvier 1994 (1994-01-01), pages 13-18, XP024180610, ISSN: 0956-716X, DOI: 10.1016/0956-716X(94)90350-6 [extrait le 1994-01-01]
- SAHEB N ET AL: "Synthesis and spark plasma sintering of Al-Mg-Zr alloys", JOURNAL OF CENTRAL SOUTH UNIVERSITY ; SCIENCE & TECHNOLOGY OF MINING AND METALLURGY, CENTRAL SOUTH UNIVERSITY, HEIDELBERG, vol. 20, no. 1, 10 janvier 2013 (2013-01-10), pages 7-14, XP035163126, ISSN: 2227-5223, DOI: 10.1007/S11771-013-1452-8
- Z.Y MA ET AL: "High strain rate superplasticity in friction stir processed Al-Mg-Zr alloy", MATERIALS SCIENCE AND ENGINEERING: A, vol. 351, no. 1, 25 juin 2003 (2003-06-25) , pages 148-153, XP055451612, AMSTERDAM, NL ISSN: 0921-5093, DOI: 10.1016/S0921-5093(02)00824-9
- TSAKIROPOULOS P ET AL: "Development of Al-Cr-X and Al-Cr-Zr-X alloys by rapid solidification from the melt", MATERIALS SCIENCE ENGINEERING, ELSEVIER SEQUOIA, LAUSANNE, CH, vol. 98, 1 février 1988 (1988-02-01), pages 143-147, XP025878519, ISSN: 0025-5416, DOI: 10.1016/0025-5416(88)90143-7 [extrait le 1988-02-01]

## Description

### DOMAINE TECHNIQUE

Le domaine technique de l'invention est un procédé de fabrication d'une pièce en alliage d'aluminium, mettant en oeuvre une technique de fabrication additive.

### ART ANTERIEUR

Depuis les années 80, les techniques de fabrication additive se sont développée. Elles consistent à mettre en forme une pièce par ajout de matière, ce qui est à l'opposé des techniques d'usinage, visant à enlever de la matière. Autrefois cantonnée au prototypage, la fabrication additive est à présent opérationnelle pour fabriquer des produits industriels en série, y compris des pièces métalliques.

Le terme « fabrication additive » est défini selon la norme française XP E67-001 comme un "ensemble des procédés permettant de fabriquer, couche par couche, par ajout de matière, un objet physique à partir d'un objet numérique". La norme ASTM F2792 (janvier 2012) définit également la fabrication additive. Différentes modalités de fabrication additive sont aussi définies et décrites dans la norme ISO/ASTM 17296-1. Le recours à une fabrication additive pour réaliser une pièce en aluminium, avec une faible porosité, a été décrit dans le document WO2015/006447. L'application de couches successives est généralement réalisée par application d'un matériau dit d'apport, puis fusion ou frittage du matériau d'apport à l'aide d'une source d'énergie de type faisceau laser, faisceau électronique, torche plasma ou arc électrique. Quelle que soit la modalité de fabrication additive appliquée, l'épaisseur de chaque couche ajoutée est de l'ordre de quelques dizaines ou centaines de microns. Le matériau d'apport peut se présenter sous la forme d'une poudre ou d'un fil.

Parmi les méthodes de fabrication additive utilisables, citons par exemple, et de façon non limitative, la fusion ou le frittage d'un matériau d'apport prenant la forme d'une poudre. Il peut s'agir de fusion ou de frittage laser. La demande de brevet US20170016096 décrit un procédé de fabrication d'une pièce par fusion localisée obtenue par l'exposition d'une poudre à un faisceau d'énergie de type faisceau d'électrons ou faisceau laser, le procédé étant également désigné par les acronymes anglo-saxons SLM, signifiant "Selective Laser Melting" ou "EBM", signifiant "Electron Beam Melting". La poudre est constituée d'un alliage d'aluminium dont la teneur en cuivre est de 5 à 6 % en masse, la teneur en magnésium étant de 2,5 à 3,5 % en masse. Le document WO2018185259 décrit un alliage, destiné à être utilisé sous la forme d'une poudre, dans un procédé de fabrication additive de type SLM. L'alliage peut notamment contenir de 2 à 7 % en masse de Mg. Il peut également contenir une fraction massique de Zr de 0 à 1 %.

Le document WO 2018009359 décrit un alliage d'aluminium, sous forme de poudre, comportant une fraction massique de Mg de 1 à 10 %, ainsi qu'une fraction massique de Zr de 0,3 à 3 %. L'alliage peut également comporter Zn, Mn, Cr, Si, Fe, Cu, mais ces éléments sont alors présents sous la forme d'impuretés inévitables, dont la teneur est inférieure à 500 ppm.

L'article GRIFFITHS S ET AL: "Effect of laser rescanning on the grain microstructure of a sélective laser melted AI-Mg-Zr alloy",MATERIALS CHARACTERIZATION, ELSEVIER, NEW YORK,US, vol. 143, 26 mars 2018, pages 34-42 décrit un alliage pour la fabrication additive.

Les propriétés mécaniques des pièces d'aluminium obtenues par fabrication additive dépendent de l'alliage formant le métal d'apport, et plus précisément de sa composition ainsi que des traitements thermiques appliqués suite à la mise en oeuvre de la fabrication additive.

Les inventeurs ont déterminé une composition d'alliage qui, utilisée dans un procédé de fabrication additive, permet d'obtenir des pièces aux performances mécaniques remarquables, en particulier en matière de dureté. Un avantage de la composition définie par les inventeurs est qu'il n'est pas nécessaire de mettre en oeuvre des traitements thermiques de type mise en solution et trempe. Par ailleurs, la composition décrite ci-après permet de former des couches présentant un niveau de porosité faible. Elle est en outre adaptée à une mise en oeuvre d'un procédé de fabrication additive selon une puissance et une vitesse élevées. Elle permet ainsi la fabrication de pièces avec un rendement de fabrication élevé.

### EXPOSE DE L'INVENTION

Un premier objet de l'invention est un procédé de fabrication d'une pièce selon la revendication 1, comportant une formation de couches métalliques successives, superposées les unes aux autres, chaque couche étant formée par le dépôt d'un métal d'apport, le métal d'apport étant soumis à un apport d'énergie de façon à entrer en fusion et à constituer, en se solidifiant, ladite couche, le procédé étant caractérisé en ce que le métal d'apport est un alliage d'aluminium comportant notamment les éléments d'alliage suivant, en pourcentages massiques :
- Mg : 0 % - 6 % ;
- Zr : 0,7 % - 2,5 %, de préférence selon une première variante > 1 % et ≤ 2,5 % ; ou de préférence selon une deuxième variante 0,7 - 2 % ; voire 0,7 - 1,6 % ; voire 0,7 - 1,4 % ; voire 0,8 - 1,4 % ; voire 0,8 - 1,2 % ;
- au moins un élément d'alliage choisi parmi Fe, Cu, Mn, Ni et/ou La : au moins 0,1 %, de préférence au moins 0,25 %, plus préférentiellement au moins 0,5 % par élément ;
- impuretés : < 0,05% individuellement, et de préférence < 0,15 % au total.

De préférence, le reste de l'alliage est de l'aluminium. De préférence, l'alliage selon la présente invention comprend une fraction massique d'au moins 85 %, plus préférentiellement d'au moins 90 % d'aluminium.

Concernant la quantité de Zr, il est à noter que la première variante est particulièrement adaptée en présence de Mn.

La fusion du métal d'apport peut être partielle ou totale. De préférence, de 50 à 100 % du métal d'apport exposé entre en fusion, plus préférentiellement de 80 à 100 %.

Chaque couche peut notamment décrire un motif défini à partir d'un modèle numérique. Selon une variante de l'invention, la teneur en Mg peut être inférieure à 3,5 %, de préférence inférieure à 3 %, préférentiellement inférieure à 2 %, plus préférentiellement inférieure à 1 %, encore plus préférentiellement inférieure à 0,05 % en masse.

Selon cette variante, les alliages selon l'invention semblent particulièrement avantageux pour présenter un bon compromis à température ambiante entre la conductivité (thermique ou électrique) et la résistance mécanique. En effet, la conductivité (électrique ou thermique) des alliages selon l'invention à température ambiante semble augmenter d'une manière continue avec la durée de maintien à la température de recuit de durcissement, par exemple à 400°C. La résistance mécanique à température ambiante, quant à elle, semble d'abord augmenter pour atteindre un pic entre 0 et 10 h de maintien (par exemple à 400°C) avant de commencer à baisser. Ainsi, en fonction des compromis recherchés, le temps de maintien à la température de recuit de durcissement semble devoir être ajusté.

La température de recuit de durcissement peut être de 300 à 500°C.

Une teneur en Mg > 3,5 %, voire 3 %, voire 2 % en masse semble bénéfique pour la résistance mécanique mais semble dégrader la conductivité (thermique ou électrique).

Selon une autre variante de l'invention, l'alliage peut comporter de 0,2 à 6 %, de préférence de 1 à 5 %, préférentiellement de 2 à 5 %, plus préférentiellement de 3 à 5 %, encore plus préférentiellement de 3,5 à 5 % en masse de Mg.

La teneur en Zr est de préférence selon une première variante de 1,2 à 2 %, voire de 1,2 à 1,8 %. La teneur en Zr est de préférence selon une deuxième variante de 0,7 à 2 % ; voire de 0,7 à 1,6 % ; voire de 0,7 à 1,4 % ; voire de 0,8 à 1,4 % ; voire de 0,8 à 1,2 %.

L'alliage d'aluminium peut comporter Cu : de 0,1 à 5 %, de préférence de 0,1 à 4 %, préférentiellement de 0,5 à 3 %, et par exemple 1 ou 2 %.

L'alliage d'aluminium peut comporter Fe : de 0,1 à 5 %, de préférence de 0,1 à 4 %, préférentiellement de 0,5 à 3 %, et par exemple 1 ou 2 %.

L'alliage d'aluminium peut comporter Ni : de 0,1 à 5 %, de préférence de 0,5 à 3 %, et par exemple 1 ou 2 %.

L'alliage d'aluminium peut comporter La : de 0,1 à 5 %, de préférence de 0,5 à 3 %, et par exemple 1 ou 2 %.

L'alliage d'aluminium peut comporter Mn : de 0,1 à 5 %, de préférence de 0,5 à 3 %, et par exemple 1 ou 2 %.

La teneur cumulée des éléments d'alliage précédemment cités est de préférence strictement supérieure à 0,1 %. Elle peut être de 0,1 % à 5 %. Elle est de préférence inférieure à 10 %.

L'alliage d'aluminium peut comporter au moins un autre élément d'alliage. Le terme « autre élément d'alliage » désigne un additif, différent des éléments d'alliages listés ci-avant. L'autre élément d'alliage ou chaque autre élément d'alliage est choisi parmi : Si, Hf, V, Cr, Ta, Nb, W, Ti, Y, Yb, Ce, Co, Mo, Nd et/ou Er, la teneur de l'autre élément d'alliage ou de chaque autre élément d'alliage étant de 0,05 % à 5 %, ou de 0,1 % à 3 %, ou de 0,1 à 2 %, ou de 0,1 à 1 %, ou de 0,1 à 0,5 %. De préférence, la teneur cumulée des autres éléments d'alliage est inférieure à 10 %, et de préférence inférieure à 5 %.

Le procédé peut comporter, après la formation des couches, c'est-à-dire après la formation de la pièce finale, une application d'au moins un traitement thermique, la température du traitement thermique étant de préférence de 300°C à 600°C. Le traitement thermique peut être un recuit ou un revenu. De préférence, le procédé ne comporte pas de traitement thermique de type trempe suite à la formation des couches, c'est-à-dire suite à la formation de la pièce finale. Selon un mode de réalisation, le métal d'apport prend la forme d'une poudre, dont l'exposition à un faisceau de lumière ou de particules chargées, ou plus généralement une source de chaleur, résulte en une fusion localisée suivie d'une solidification, de façon à former une couche solide. Selon un autre mode de réalisation, le métal d'apport est issu d'un fil d'apport, dont l'exposition à une source de chaleur, par exemple un arc électrique, résulte en une fusion localisée suivie d'une solidification, de façon à former une couche solide.

Un deuxième objet de l'invention est une pièce obtenue par un procédé selon le premier objet de l'invention.

Un troisième objet de l'invention est une poudre destinée à être utilisée en tant que matériau d'apport d'un procédé de fabrication additive, la poudre étant destinée à être chauffée, de façon à former, sous l'effet du chauffage, une couche, la couche résultant d'une fusion suivie d'une solidification, la poudre comportant des particules en alliage d'aluminium, la poudre étant caractérisée en ce que l'alliage d'aluminium comporte notamment les éléments d'alliage suivant, en pourcentages massiques :
- Mg : 0 % - 6 % ;
- Zr : 0,7 % - 2,5 %, de préférence selon une première variante > 1 % et ≤ 2,5 % ; ou de préférence selon une deuxième variante 0,7 - 2 % ; voire 0,7 - 1,6 % ; voire 0,7 - 1,4 % ; voire 0,8 - 1,4 % ; voire 0,8 - 1,2 % ;
- au moins un élément d'alliage choisi parmi Fe, Cu, Mn, Ni et/ou La : au moins 0,1 %, de préférence au moins 0,25 %, plus préférentiellement au moins 0,5 % par élément ;
- impuretés : < 0,05% individuellement, et de préférence < 0,15 % au total.

La poudre peut être telle qu'au moins 80 % des particules composant la poudre ont une taille moyenne dans la plage suivante : de 5 à 100 µm, de préférence de 5 à 25 µm, ou de 20 à 60 µm. Un quatrième objet de l'invention est un fil d'apport, destiné à être utilisé en tant que matériau d'apport d'un procédé de fabrication additive, caractérisé en ce qu'il est constitué d'un alliage d'aluminium comportant les éléments d'alliage suivant, en pourcentages massiques :
- Mg : 0 % - 6 % ;
- Zr : 0,7 % - 2,5 %, de préférence selon une première variante > 1 % et ≤ 2,5 % ; ou de préférence selon une deuxième variante 0,7 - 2 % ; voire 0,7 - 1,6 % ; voire 0,7 - 1,4 % ; voire 0,8 - 1,4 % ; voire 0,8 - 1,2 % ;
- au moins un élément d'alliage choisi parmi Fe, Cu, Mn, Ni et/ou La : au moins 0,1 %, de préférence au moins 0,25 %, plus préférentiellement au moins 0,5 % par élément ;
- impuretés : < 0,05% individuellement, et de préférence < 0,15 % au total.

Lorsque le matériau d'apport se présente sous la forme d'un fil, le diamètre du fil peut notamment être de 0,5 à 3 mm, et de préférence de 0,5 à 2 mm, et encore de préférence de 1 à 2 mm.

L'alliage mis en oeuvre dans les troisième et quatrième objets de l'invention peut présenter les caractéristiques, prises isolément ou selon les combinaisons techniquement réalisables, de l'alliage décrit en lien avec le premier objet de l'invention.

Un cinquième objet de l'invention est l'utilisation d'une poudre ou d'un fil d'apport tels que décrits ci-avant et dans le reste de la description dans un procédé de fabrication choisi parmi : la pulvérisation à froid (CSC), le dépôt par fusion laser (LMD), la fabrication additive par friction (AFS), le frittage par étincelle au plasma (FAST) ou le soudage par friction rotative (IRFW), de préférence la pulvérisation à froid (CSC).

### FIGURES

[Fig. 1] La figure 1 est un schéma représentant un procédé de fabrication additif par fusion laser sélective (SLM) ;
[Fig. 2] La figure 2 représente l'évolution de la température de liquidus (axe des ordonnées) en fonction de la teneur en Zr (axe des abscisses).
[Fig. 3] La figure 3 montre une micrographie d'une coupe transversale d'un échantillon après balayage de surface avec un laser, coupé et poli avec deux empreintes de dureté Knoop dans la couche refondue.
[Fig. 4] Les figures 4A à 4D illustrent des valeurs de dureté Knoop (axe des ordonnées) d'échantillons réalisés en utilisant des compositions selon l'invention en fonction d'une durée d'un post-traitement thermique à 400°C (axe des abscisses).
[Fig. 5] Les figures 5A à 5F montrent une coupe d'un échantillon d'un alliage de référence ayant été exposé à un faisceau laser selon différentes vitesses de balayage, la puissance du laser étant respectivement de 250 W, 300 W, 350 W, 400 W, 450 W et 500 W.
[Fig. 6] Les figures 6A à 6F montrent une coupe d'un échantillon selon la présente invention d'un alliage Al - 4%Mg - 1,5%Zr- 2%Cu ayant été exposé à un faisceau laser selon différentes vitesses de balayage, la puissance du laser étant respectivement de 250 W, 300 W, 350 W, 400 W, 450 W et 500 W.
[Fig. 7] Les figures 7A à 7F montrent une coupe d'un échantillon selon la présente invention d'un alliage Al -4%Mg - 1,5%Zr- 2%Ni ayant été exposé à un faisceau laser selon différentes vitesses de balayage, la puissance du laser étant respectivement de 250 W, 300 W, 350 W, 400 W, 450 W et 500 W.
[Fig. 8] Les figures 8A à 8F montrent une coupe d'un échantillon selon la présente invention d'un alliage Al - 4%Mg - 1,5%Zr - 2%Fe ayant été exposé à un faisceau laser selon différentes vitesses de balayage, la puissance du laser étant respectivement de 250 W, 300 W, 350 W, 400 W, 450 W et 500 W.
[Fig. 9] Les figures 9A à 9F montrent une coupe d'un échantillon selon la présente invention d'un alliage Al - 4%Mg - 1,5%Zr - 2%Mn ayant été exposé à un faisceau laser selon différentes vitesses de balayage, la puissance du laser étant respectivement de 250 W, 300 W, 350 W, 400 W, 450 W et 500 W.
[Fig. 10] Les figures 10A à 10F montrent une coupe d'un échantillon selon la présente invention d'un alliage Al - 4%Mg - 1,5%Zr - 2%La ayant été exposé à un faisceau laser selon différentes vitesses de balayage, la puissance du laser étant respectivement de 250 W, 300 W, 350 W, 400 W, 450 W et 500 W.
[Fig. 11] La figure 11 est un schéma représentant un procédé de fabrication additive arc fil, usuellement désigné par l'acronyme WAAM (Wire Arc Additive Manufacturing).
[Fig. 12] La figure 12 est un schéma de l'éprouvette utilisée selon les exemples.

### EXPOSE DE MODES DE REALISATION PARTICULIERS

Dans la description, sauf indication contraire :
- la désignation des alliages d'aluminium est conforme à la nomenclature de The Aluminum Association ;
- les teneurs en éléments chimiques sont désignées en % et représentent des fractions massiques. La notation x % - y % signifie supérieur ou égal à x % et inférieur ou égal à y %.

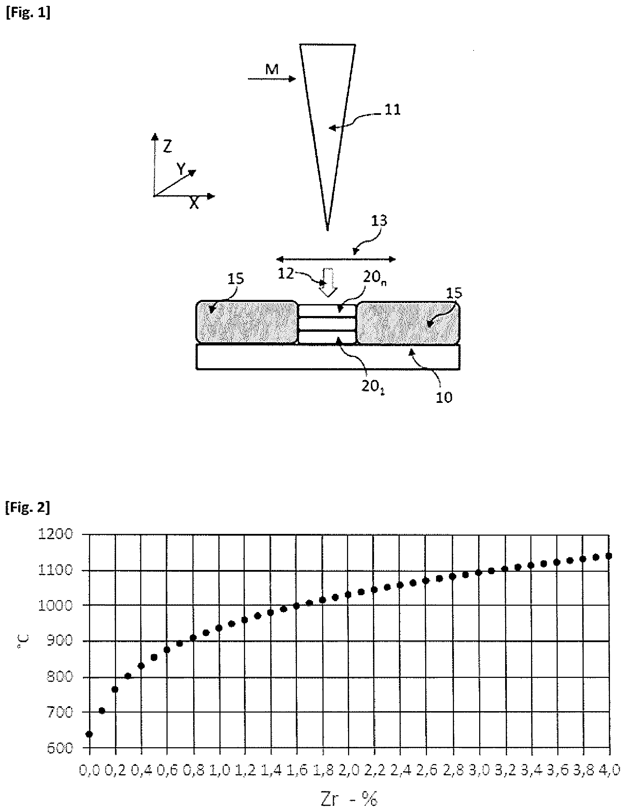

La figure 1 représente un dispositif de fabrication additive de type SLM, évoqué en lien avec l'art antérieur. Le dispositif utilise un alliage d'aluminium, formant un matériau d'apport, et disposé sous la forme d'une poudre 15, reposant sur un support 10. Une source d'énergie, en l'occurrence une source laser 11, émet un faisceau laser 12. La source laser est couplée au matériau d'apport par un système optique 13, dont le mouvement est déterminé en fonction d'un modèle numérique M. Le faisceau laser 12 suit un déplacement selon le plan longitudinal XY, décrivant un motif dépendant du modèle numérique. Le déplacement s'effectue selon une vitesse de balayage, qui représente la vitesse de déplacement du faisceau par rapport à la poudre. L'interaction du faisceau laser 12 avec la poudre 15 engendre une fusion sélective de cette dernière, suivie d'une solidification, résultant en la formation d'une couche 20₁...20ₙ. Lorsqu'une couche a été formée, elle est recouverte de poudre 15 et une autre couche est formée, superposée à la couche préalablement réalisée. L'épaisseur de la poudre formant une couche peut par exemple être de 10 à 200 µm.

Pour les alliages d'aluminium, le support 10 ou plateau peut être chauffé à une température allant jusqu'à 350°C. Les machines disponibles actuellement sur le marché offrent généralement un chauffage du plateau jusqu'à 200°C. La température de chauffage du plateau peut être par exemple d'environ 50°C, 100°C, 150°C ou 200°C. Le chauffage du plateau permet généralement de réduire l'humidité au niveau du lit de poudre et aussi de réduire les contraintes résiduelles sur les pièces en fabrication. Le niveau d'humidité au niveau du lit de poudre semble présenter un effet direct sur la porosité de la pièce finale. En effet, il semblerait que plus l'humidité de la poudre est élevée, plus la porosité de la pièce finale est élevée. Il est à noter que le chauffage du plateau est l'une des possibilités existantes pour réaliser une fabrication additive à chaud. Cependant, la présente invention ne saurait être limitée à l'utilisation de ce seul moyen de chauffage. Tous les autres moyens de chauffage peuvent être utilisés dans le cadre de la présente invention pour chauffer et contrôler la température, par exemple une lampe infra-rouge. Ainsi, le procédé selon la présente invention peut être réalisé à une température allant jusqu'à 350°C.

La poudre peut présenter au moins l'une des caractéristiques suivantes :
- taille moyenne de particules de 5 à 100 µm, de préférence de 5 à 25 µm, ou de 20 à 60 µm. Les valeurs données signifient qu'au moins 80 % des particules ont une taille moyenne dans la gamme spécifiée.
- forme sphérique. La sphéricité d'une poudre peut par exemple être déterminée en utilisant un morphogranulomètre.
- bonne coulabilité. La coulabilité d'une poudre peut par exemple être déterminée selon la norme ASTM B213 ou la norme ISO 4490 :2018. Selon la norme ISO 4490 :2018, le temps d'écoulement est de préférence inférieur à 50 s.
- faible porosité, de préférence de 0 à 5 %, plus préférentiellement de 0 à 2 %, encore plus préférentiellement de 0 à 1 % en volume. La porosité peut notamment être déterminée par microscopie optique ou microscopie électronique à balayage ou par pycnométrie à l'hélium (voir la norme ASTM B923).
- absence ou faible quantité (moins de 10 %, de préférence moins de 5 % en volume) de petites particules (1 à 20 % de la taille moyenne de la poudre), dites satellites, qui collent aux particules plus grosses.

Les inventeurs ont cherché une composition d'alliage, formant le matériau d'apport, permettant d'obtenir des propriétés mécaniques acceptables, sans nécessiter l'application de traitements thermiques, subséquents à la formation des couches, c'est-à-dire après la formation de la pièce finale, risquant d'induire une distorsion. Il s'agit notamment de traitements thermiques impliquant une variation brutale de la température. Ainsi, l'invention permet d'obtenir, par fabrication additive, une pièce dont les propriétés mécaniques sont satisfaisantes, en particulier en termes de dureté. En fonction du type de procédé de fabrication additive choisi, le matériau d'apport peut se présenter sous la forme d'une poudre, comme précédemment décrit. Dans ce cas, l'exposition de la poudre (15) à un faisceau de lumière (12) ou de particules chargées résulte en une fusion localisée suivie d'une solidification, de façon à former une couche solide (20₁...20ₙ).

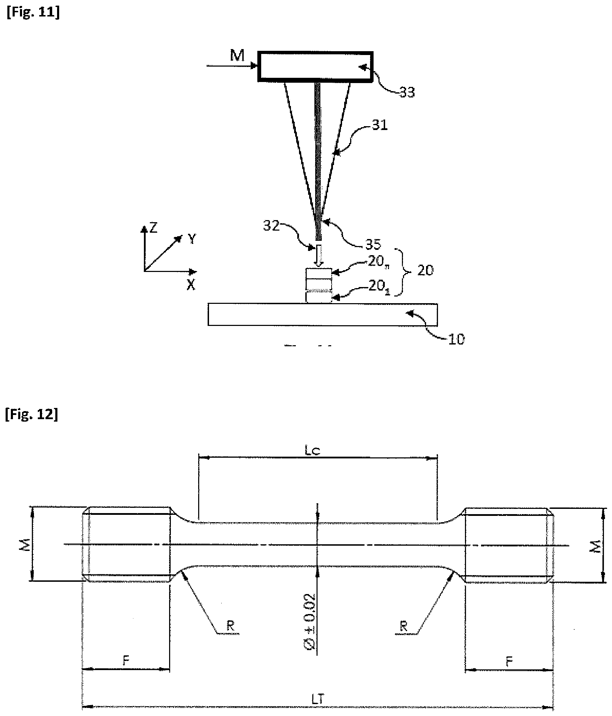

Selon une variante, le métal d'apport peut également se présenter sous la forme d'un fil, comme décrit en lien avec la figure 11. Dans ce cas, l'exposition du fil d'apport (35) à une source de chaleur (32) résulte en une fusion localisée suivie d'une solidification, de façon à former une couche solide (20₁...20ₙ).

Les inventeurs ont constaté qu'on pouvait obtenir une pièce présentant des propriétés mécaniques satisfaisantes en utilisant un alliage d'aluminium combinant :
- une teneur en magnésium de 0 à 6 % et de préférence de 1 à 6 %, et de préférence de 3 à 4,5 %. Une teneur en magnésium inférieure à 3,5 % peut également être avantageuse, en particulier pour la tenue à la corrosion après une exposition thermique.
- une teneur en zirconium selon une première variante de 1 à 2,5 %, et de préférence de 1 à 2 %, en étant strictement supérieure à 1 %. Une teneur en Zr de 1,2 à 2 % ou de 1,2 à 1,8% est considérée comme optimale. Ou selon une deuxième variante de 0,7 à 2 % ; voire de 0,7 à 1,6 % ; voire de 0,7 à 1,4 % ; voire de 0,8 à 1,4 % ; voire de 0,8 à 1,2 %.
- un élément d'alliage, dont la teneur supérieure à 0,1 %, ou supérieure à 0,25 % ou 0,5 %, l'élément d'alliage étant choisi parmi Fe, Cu, Ni, Mn et/ou La. La teneur en chaque élément d'alliage est de préférence inférieure à 5 %, plus préférentiellement inférieure à 3 %. La teneur cumulée de chaque élément d'alliage est de préférence de 0,1 à 5 %. Elle peut être inférieure à 10 %.

L'utilisation d'un tel alliage dans un procédé de fabrication additive s'accompagne des avantages suivants :
- une bonne compatibilité avec des procédés par fabrication additive, en particulier le procédé SLM : cela se traduit par l'absence de fissures au niveau des couches formées successivement ;
- une bonne résistance à la corrosion, en particulier lorsque la teneur en magnésium est de 3 à 4,5 %, ou lorsque cette dernière est inférieure à 3,5 %.
- une température de fusion (liquidus) inférieure à 1050°C, et de préférence inférieure à 1000°C, ce qui limite l'évaporation du Mg durant la fusion. Lorsque la teneur en Mg est de 4 %, la température de liquidus est inférieure à 1050°C lorsque la teneur en Zr est inférieure à 2,2 %. Lorsque la teneur en Zr est inférieure à 1,6 %, la température de liquidus est inférieure à 1000°C. Avec un tel alliage, on obtient une pièce présentant une dureté élevée. Pour ces raisons, une teneur en Zr de 0,7 à 2 % ou de 1 à 2 % ou de 1,2 à 1,8 %, est optimale lorsque la teneur en Mg est de l'ordre de 4 % et de préférence en présence de Mn.

La figure 2 représente une évolution de la température de liquidus en fonction de la teneur en Zr, pour un alliage d'aluminium comportant 4 % de Mg. Cette courbe a été obtenue en utilisant le logiciel FactSage 7.1 en utilisant la base de données VLAB. Elle montre qu'une teneur en Zr inférieure à 2,2 % permet de maintenir la température de liquidus inférieure ou égale à 1050°C. Par ailleurs, une teneur en Zr inférieure ou égale à 0,7 %, voire 1 % est considérée comme non avantageuse, les propriétés mécaniques étant alors insuffisantes, par exemple une dureté maximale inférieure à 120 HK0,05. Une teneur en Zr voisine de 1,5 %, c'est-à-dire de 1 à 2 %, ou de 1,2 à 2 % ou de 1,2 à 1,8 %, semble optimale, selon une première variante, de préférence en présence de Mn.

L'alliage peut comporter d'autres éléments d'alliage, choisis parmi : Si, Hf, V, Cr, Ta, Nb, W, Ti, Y, Yb, Ce, Co, Mo, Nd et/ou Er, la teneur de l'autre élément d'alliage ou de chaque autre élément d'alliage étant de 0,05 à 5 %, ou de 0,1 à 3 %, ou de 0,1 à 2 %, ou de 0,1 à 1 %, ou de 0,1 à 0,5 %. La fraction massique des autres éléments d'alliage, pris en totalité, est de préférence inférieure à 10 %, et de préférence inférieure à 5 %, et de préférence inférieure à 3 % ou même à 2 %. De tels éléments peuvent engendrer une augmentation de la dureté par effet solution solide et/ou par la formation de dispersoïdes ou de phases intermétalliques fines.

L'alliage peut comporter des autres éléments choisis parmi Sr, Ba, Sb, Bi, Ca, P, B, In, Sn, selon une fraction massique inférieure ou égale à 1 %, et de préférence inférieure ou égale à 0,1 %, et encore de préférence inférieure ou égale à 700 ppm pour chaque élément. De préférence, la fraction massique totale de ces éléments est inférieure à 2 %, et de préférence à 1 %. Il peut être préférable d'éviter une addition excessive de Bi, la fraction massique préférée étant inférieure à 0,05 %, et de préférence inférieure à 0,01 %.

L'alliage peut comporter d'autres éléments tels que :
- Ag, selon une fraction massique de 0,06 à 1 % ;
- et/ou Li, selon une fraction massique de 0,06 à 2 % ;
- et/ou Zn, selon une fraction massique de 0,05 à 5%, de préférence de 0,1 à 3 %.

Selon un mode de réalisation, l'alliage peut également comprendre au moins un élément pour affiner les grains et éviter une microstructure colonnaire grossière, par exemple AITiC ou AlTiB₂, par exemple un affinant sous forme AT5B ou AT3B, selon une quantité inférieure ou égale à 50 kg/tonne, et de préférence inférieure ou égale à 20 kg/tonne, encore plus préférentiellement égale à 12 kg/tonne pour chaque élément, et inférieure ou égale à 50 kg/tonne, et de préférence inférieure ou égale à 20 kg/tonne pour l'ensemble de ces éléments.

Le procédé peut comporter, suite à la formation des couches, c'est-à-dire suite à la formation de la pièce finale, un traitement thermique, désigné par le terme post traitement. Il peut comporter une mise en solution suivie d'une trempe et d'un revenu. Cependant, comme précédemment décrit, la trempe peut engendrer une déformation de la pièce formée par fabrication additive, notamment lorsque les dimensions de cette dernière sont élevées. Aussi, lorsqu'un traitement thermique est appliqué, il est préférable que sa température soit de 300 à 600°C, de préférence inférieure à 500°C ou plus préférentiellement inférieure ou égale à 450°C, et par exemple de 100°C à 450°C. Il peut en particulier s'agir d'un revenu ou d'un recuit de durcissement. D'une façon générale, le traitement thermique peut permettre un détensionnement des contraintes résiduelles et/ou une précipitation supplémentaire de phases durcissantes.

De préférence, le procédé selon la présente invention ne comporte pas de traitement thermique de type trempe suite à la formation des couches, c'est-à-dire suite à la formation de la pièce finale.

Selon un mode de réalisation, le procédé peut comporter une compression isostatique à chaud (CIC). Le traitement CIC peut notamment permettre d'améliorer les propriétés d'allongement et les propriétés en fatigue. La compression isostatique à chaud peut être réalisée avant, après ou à la place du traitement thermique. Avantageusement, la compression isostatique à chaud est réalisée à une température de 250°C à 550°C et de préférence de 300°C à 450°C, à une pression de 500 à 3000 bars et pendant une durée de 0,5 à 10 heures. En fonction des propriétés recherchées, la température du traitement CIC ne dépassera pas 450°C voire 400°C, car l'augmentation de la température diminue les résistances mécaniques.

L'éventuel traitement thermique et/ou la compression isostatique à chaud permet en particulier d'augmenter la dureté du produit obtenu, dans certaines conditions, notamment de température.

Selon un autre mode de réalisation, adapté aux alliages à durcissement structural, on peut réaliser une mise en solution suivie d'une trempe et d'un revenu de la pièce formée et/ou une compression isostatique à chaud. La compression isostatique à chaud peut dans ce cas avantageusement se substituer à la mise en solution.

Cependant le procédé selon l'invention est avantageux, car il ne nécessite de préférence pas de traitement de mise en solution suivi de trempe. La mise en solution peut avoir un effet néfaste sur la résistance mécanique dans certains cas en participant à un grossissement des dispersoïdes ou des phases intermétalliques fines.

Selon un mode de réalisation, le procédé selon la présente invention comporte en outre optionnellement un traitement d'usinage, et/ou un traitement de surface chimique, électrochimique ou mécanique, et/ou une tribofinition. Ces traitements peuvent être réalisés notamment pour réduire la rugosité et/ou améliorer la résistance à la corrosion et/ou améliorer la résistance à l'initiation de fissures en fatigue.

Optionnellement, il est possible de réaliser une déformation mécanique de la pièce, par exemple après la fabrication additive et/ou avant le traitement thermique.

Les essais décrits dans la suite de la description montrent que l'utilisation de l'alliage selon l'invention permet une obtention de pièces présentant une dureté élevée. Cela permet d'éviter le recours à des traitements thermiques post fabrication impliquant une variation brutale de la température, et risquant d'induire une distorsion, comme précédemment évoqué.

Les inventeurs ont également constaté que l'alliage tel que précédemment décrit est particulièrement adapté à être appliqué dans un procédé de fabrication additive, au cours duquel l'alliage subit une fusion localisée suivie d'une solidification. En particulier, l'alliage est adapté à un procédé combinant une forte puissance et une vitesse de balayage élevée. L'alliage est ainsi propice à une mise en oeuvre efficace d'un procédé de fabrication additive.

### Exemples

### Essais 1.

Les alliages testés ont été coulés dans un moule en cuivre en utilisant une machine Induthem VC 650V pour obtenir des lingots de 130 mm de hauteur, de 95 mm de largeur et de 5 mm d'épaisseur.

Les alliages tels que décrits dans le tableau 1 ci-avant ont été testés par une méthode de prototypage rapide. Des échantillons ont été usinés pour le balayage de la surface avec un laser, sous forme de plaquettes de dimensions 60 x 22 x 3 mm, à partir des lingots obtenus ci-avant. Les plaquettes ont été placées dans une machine SLM et des balayages de la surface ont été effectués avec un laser en suivant la même stratégie de balayage et des conditions de procédé représentatives de celles utilisées pour le procédé SLM. Il a en effet été constaté qu'il était possible de cette manière d'évaluer l'aptitude des alliages au procédé SLM et notamment la qualité de surface, la sensibilité à la fissuration à chaud, la dureté à l'état brut et la dureté après traitement thermique.

Sous le faisceau laser, le métal fond dans un bain de 10 à 350 µm d'épaisseur. Après le passage du laser, le métal refroidit rapidement comme dans le procédé SLM. Après le balayage laser, une fine couche en surface de 10 à 350 µm d'épaisseur a été fondue puis solidifiée. Les propriétés du métal dans cette couche sont proches des propriétés du métal au coeur d'une pièce fabriquée par SLM, car les paramètres de balayage sont judicieusement choisis. Le balayage laser de la surface des différents échantillons a été effectué à l'aide d'une machine de fusion laser sélective ProX300 de marque 3DSystems. La source laser avait une puissance de 250 W, l'écart vecteur était de 60 µm, la vitesse de balayage était de 300 mm/s et le diamètre du faisceau était de 80 µm.

### Mesure de dureté Knoop

La dureté est une propriété importante pour les alliages. En effet, si la dureté dans la couche refondue par balayage de la surface avec un laser est élevée, une pièce fabriquée avec le même alliage aura potentiellement une limite de rupture élevée.

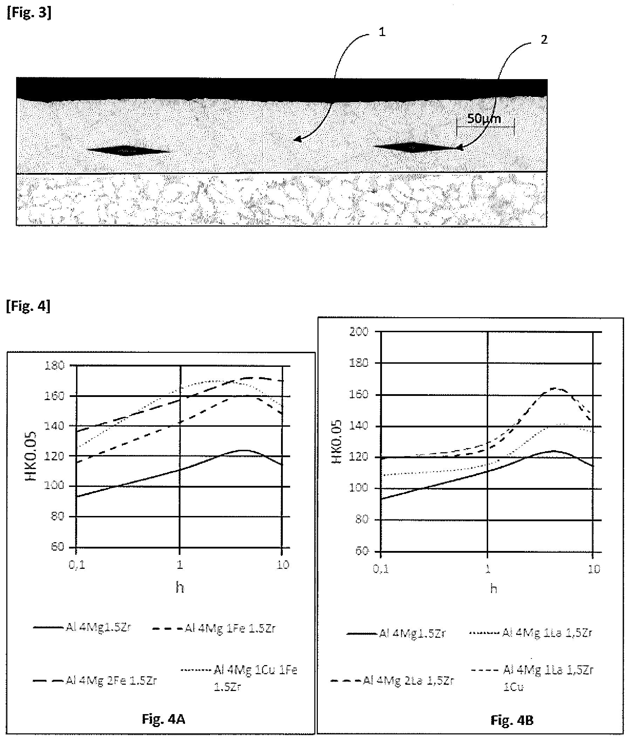

Pour évaluer la dureté de la couche refondue, les plaquettes obtenues ci-avant ont été coupées dans le plan perpendiculaire à la direction des passes du laser et ont ensuite été polis. Après polissage, des mesures de dureté ont été effectuées dans la couche refondue. La mesure de dureté a été effectuée avec un appareil de modèle Durascan de Struers. La méthode de dureté Knoop 50 g avec la grande diagonale de l'empreinte placée parallèlement au plan de la couche refondue a été choisie pour garder suffisamment de distance entre l'empreinte et le bord de l'échantillon. 15 empreintes ont été positionnées à mi-épaisseur de la couche refondue. La Figure 3 montre un exemple de la mesure de dureté. La référence 1 correspond à la couche refondue et la référence 2 correspond à une empreinte de dureté Knoop.

La dureté a été mesurée selon l'échelle Knoop avec une charge de 50 g après traitement laser (à l'état brut) et après un traitement thermique supplémentaire à 400°C pendant des durées variables, permettant notamment d'évaluer l'aptitude de l'alliage au durcissement lors d'un traitement thermique et l'effet d'un éventuel traitement CIC sur les propriétés mécaniques.

Suite à chaque essai, un post traitement thermique a été appliqué sur certains échantillons. Le traitement thermique est de type recuit de durcissement, à une température de 400°C, et cela durant 1 heure, ou 4 heures, ou 10 heures.

On a utilisé un alliage de référence, comportant de l'aluminium, ainsi que les éléments d'alliages suivants : Mg (4 %) ; Zr (1,5 %). L'alliage de référence est tel que décrit dans la publication WO2018/185259.

La composition des alliages d'aluminium testés est présentée dans le tableau 1 ci-après, en pourcentages massiques :

**[Tableau 1]**

| **N° composition** | **Mg** | **Zr** | **Cu** | **Fe** | **Mn** | **Ni** | **La** |
|---|---|---|---|---|---|---|---|
| **Ref** | 4% | 1.5% | | | | | |
| **1** | 4% | 1.5% | 2% | | | | |
| **2** | 4% | 1.5% | | 1% | | | |
| **3** | 4% | 1.5% | | 2% | | | |
| **4** | 4% | 1.5% | 1% | 1% | | | |
| **5** | 4% | 1.5% | | | | 2% | |
| **6** | 4% | 1.5% | | | 2% | | |
| **7** | 4% | 1.5 % | 1% | | | 1% | |
| **8** | 4% | 1.5% | | | | | 1% |
| **9** | 4% | 1.5% | | | | | 2% |
| **10** | 4% | 1.5% | 1% | | | | 1% |

Le tableau 2 ci-après montre les valeurs de dureté Knoop 0,05 mesurées pour chaque alliage, soit après traitement laser, à l'état brut (colonne 0h), soit après un recuit de durcissement à 400°C, réalisé après le traitement laser, pendant 1 heure (colonne 1h), ou pendant 4 heures (colonne 4h), ou pendant 10 heures (colonne 10h). La colonne max indique le niveau maximal de dureté mesuré sur les différents échantillons testés. Les valeurs en gras indiquent le traitement thermique ayant conduit à l'obtention de la valeur de dureté la plus élevée.

**[Tableau 2]**

| **N° composition** | **liquidus** | **0h** | **1h** | **4h** | **10h** | **max** |
|---|---|---|---|---|---|---|
| **Ref** | 990 | 93 | 111 | **124** | 114 | 124 |
| **1** | 995 | 104 | **148** | **148** | 133 | 148 |
| **2** | 993 | 116 | 143 | **160** | 148 | 160 |
| **3** | 996 | 136 | 157 | **171** | 170 | 171 |
| **4** | 995 | 125 | 165 | **168** | 153 | 168 |
| **5** | 987 | 121 | 143 | **151** | 137 | 151 |
| **6** | 995 | 127 | 123 | **165** | 156 | 165 |
| **7** | 991 | 125 | **164** | **156** | 139 | 164 |
| **8** | 994 | 108 | 115 | **140** | 136 | 140 |
| **9** | 998 | 119 | 125 | **164** | 142 | 164 |
| **10** | 996 | 119 | 129 | **163** | 147 | 163 |

La figure 4A montre les résultats obtenus relativement aux compositions 2 (1 % Fe), 3 (2 % Fe) et 4 (1 % Fe, 1 % Cu), ainsi qu'avec la composition de référence. On constate que les compositions 2, 3 et 4 permettent d'obtenir une dureté supérieure à la composition de référence, quelle que soit la durée du traitement thermique. Les valeurs de dureté les plus élevées sont obtenues avec une durée de traitement thermique de 4h. Les valeurs les plus élevées sont obtenues avec les compositions 3 (2 % Fe) et 4 (1 % Fe, 1 % Cu).

La figure 4B montre les résultats obtenus relativement aux compositions 8 (1 % La), 9 (2 % La) et 10 (1 % La - 1 % Cu), ainsi qu'avec la composition de référence. On constate que les compositions 8, 9 et 10 permettent d'obtenir une dureté supérieure à la composition de référence, quelle que soit la durée du traitement thermique. Les valeurs de dureté les plus élevées sont obtenues avec une durée de traitement thermique de 4h. Les valeurs les plus élevées sont obtenues avec les compositions 9 (2 % La) et 10 (1 % La - 1 % Cu).

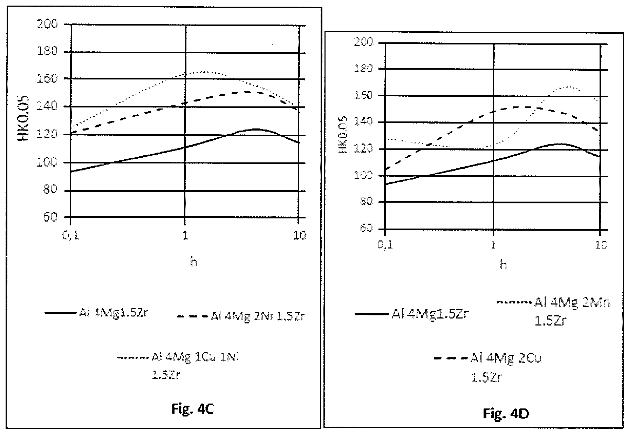

La figure 4C montre les résultats obtenus relativement aux compositions 5 (2 % Ni), 7 (1 % Cu, 1 % Ni) ainsi qu'avec la composition de référence. On constate que les compositions 5 et 7 permettent d'obtenir une dureté supérieure à la composition de référence, quelle que soit la durée du traitement thermique. Les valeurs de dureté les plus élevées sont obtenues avec une durée de traitement thermique de 4 heures pour la composition 7 et 1 heure pour la composition 5. Les valeurs les plus élevées sont obtenues avec la composition 7 (1 % Cu, 1 % Ni).

La figure 4D montre les résultats obtenus relativement aux compositions 1 (2 % Cu), 6 (2 % Mn) ainsi qu'avec la composition de référence. On constate que les compositions 1 et 6 permettent d'obtenir une dureté supérieure à la composition de référence, quelle que soit la durée du traitement thermique. Les valeurs les plus élevées sont obtenues avec la composition 6 (2 % Mn).

Ces résultats montrent que :
- le recours à au moins un élément d'alliage, choisi parmi Fe, Cu, Ni, Mn, La, avec une teneur supérieure ou égale à 0,1 % individuellement, permet d'augmenter la dureté par rapport à la composition de référence, ne comportant pas ces éléments d'alliage ;
- l'application d'un recuit de durcissement, en particulier à une température de 400°C, améliore la dureté, la durée optimale étant obtenue en mettant en oeuvre un traitement thermique selon une durée de 1h à 8h, en étant par exemple égale à 4h.
- les compositions 3 (2 % Fe), 4 (1 %Cu - 1 % Fe), 6 (2 % Mn), 7 (1 % Cu, 1 % Ni), 9 (2 % La) et 10 (1 % La - 1 % Cu) conduisent aux valeurs de dureté les plus élevées.
- les compositions présentant Fe et/ou Cu, avec une teneur cumulée de 2 %, semblent particulièrement favorables.

### Essais 2

Des échantillons ont été usinés sous forme de plaquettes de dimensions 60 x 22 x 3 mm, à partir des lingots obtenus ci-avant (voir Essais 1). Au cours d'une deuxième série d'essais, ces échantillons ont fait l'objet d'un balayage à l'aide d'un faisceau laser, selon différentes puissances (entre 250 W et 500 W) et différentes vitesses (entre 300 mm/s et 2500 mm/s). La taille du faisceau laser était de 80 µm. La plage de vitesse a été adaptée à la puissance. Ainsi :
- à une puissance de 250 W, la vitesse a varié entre 300 mm/s et 1500 mm/s, par incréments de 200 mm/s ;
- à une puissance de 300 W, la vitesse a varié entre 500 mm/s et 1700 mm/s par incréments de 200 mm/s ;
- à une puissance de 350 W, la vitesse a varié entre 700 mm/s et 1900 mm/s par incréments de 200 mm/s ;
- à une puissance de 400 W, la vitesse a varié entre 900 mm/s et 2100 mm/s, par incréments de 200 mm/s ;
- à une puissance de 450 W, la vitesse a varié entre 1100 mm/s et 2300 mm/s, par incréments de 200 mm/s ;
- à une puissance de 500 W, la vitesse a varié entre 1300 mm/s et 2500 mm/s, par incréments de 200 mm/s.

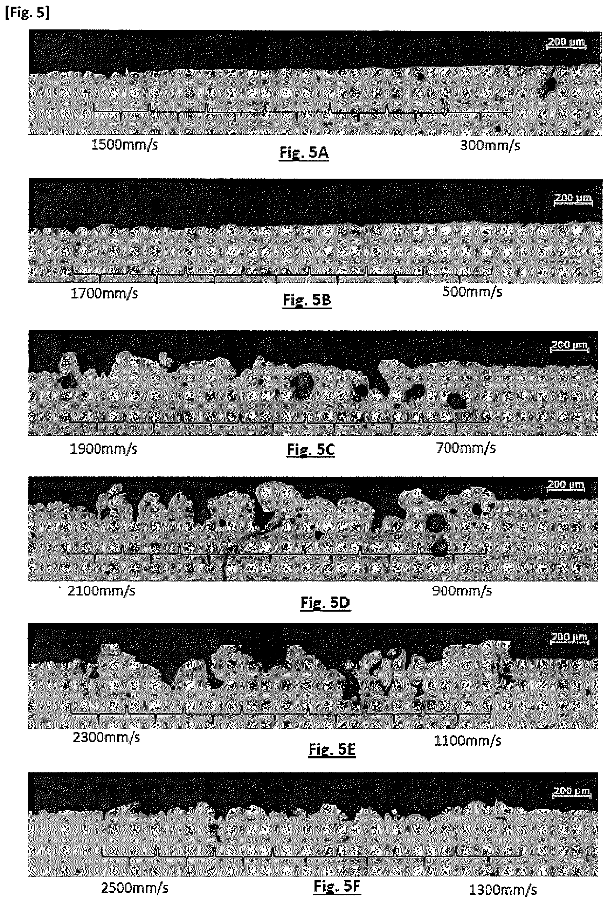

L'objectif de ces essais était d'analyser la morphologie de la partie superficielle de chaque échantillon après les phases de fusion et solidification. La partie superficielle ayant subi ces changements de phase est désignée par le terme "zone fondue". Elle est considérée comme représentative de la morphologie des couches formées par fabrication additive. Les essais ont permis de caractériser l'état de surface des échantillons, en particulier la porosité et la rugosité. Chaque échantillon a fait l'objet d'une coupe selon l'épaisseur, cette dernière ayant été caractérisée à l'aide d'un microscope optique. Les résultats des caractérisations, pour différentes compositions, sont représentés sur les figures 5A à 5F, 6A à 6F, 7A à 7F, 8A à 8F, 9A à 9F, 10A à 10F. Chaque figure correspond à une coupe réalisée à puissance constante, en faisant varier la vitesse de balayage entre une vitesse minimale, indiquée à gauche de la figure, et une vitesse maximale, indiquée à droite de la figure. Chaque figure montre ainsi les profils de la surface exposée au faisceau laser pour différentes vitesses, à une même puissance. A chaque niveau de puissance, on a testé 7 vitesses, avec 4 lignes par vitesse. On a représenté, par une accolade, les parties des échantillons correspondant à une même vitesse de passage. Sur les figures, on observe que les lignes correspondant à une même vitesse (i-e dans une même accolade) se superposent partiellement.

Les figures 5A, 5B, 5C, 5D, 5E et 5F montrent les coupes obtenues avec des échantillons dont la composition correspond à la composition de référence décrite dans le tableau 1, respectivement pour les puissances 250 W, 300 W, 350 W, 400 W, 450 W, 500 W.

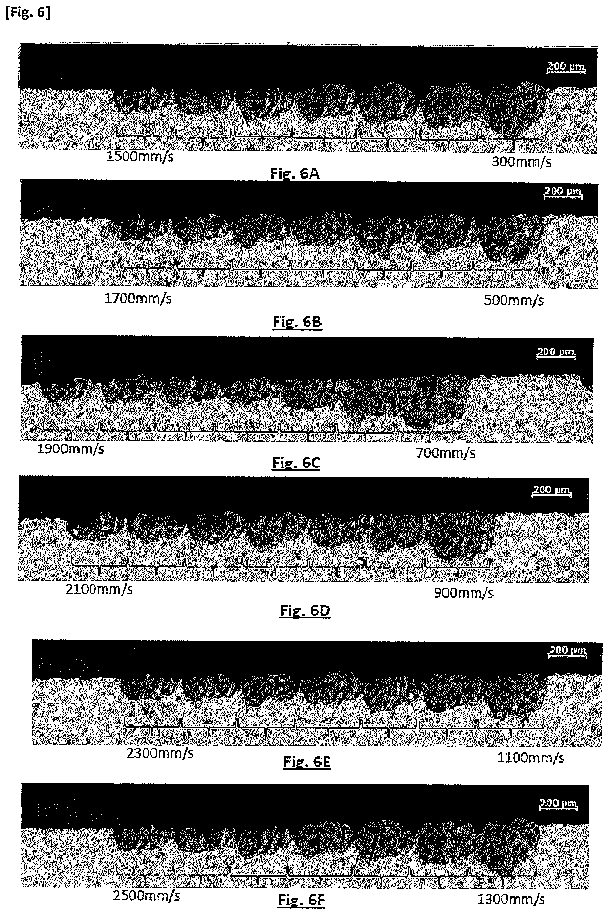

Les figures 6A, 6B, 6C, 6D, 6E et 6F montrent les coupes obtenues avec des échantillons dont la composition correspond à la composition n°1 décrite dans le tableau 1 (4 % Mg ; 1,5 % Zr - 2 % Cu), respectivement pour les puissances 250 W, 300 W, 350 W, 400 W, 450 W, 500 W.

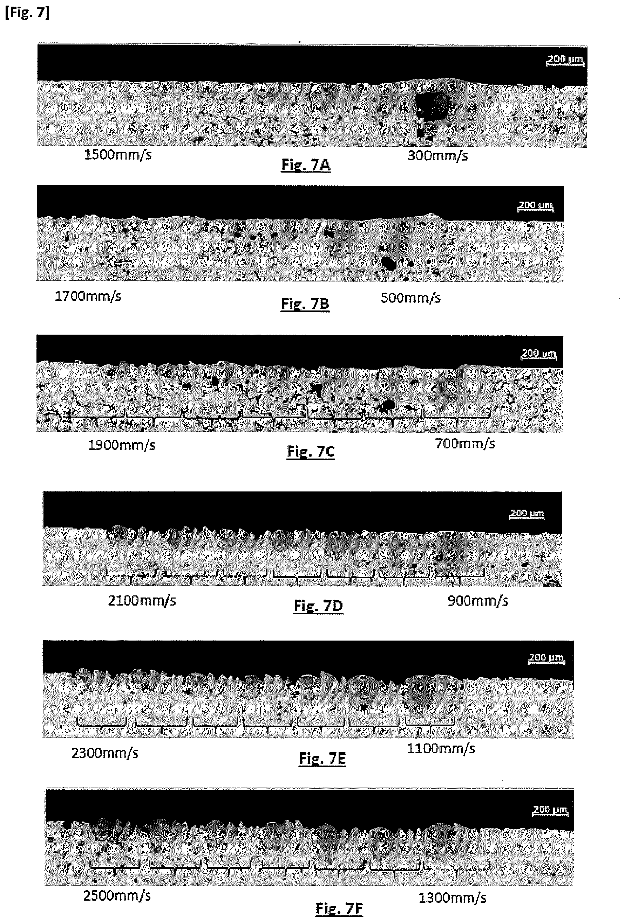

Les figures 7A, 7B, 7C, 7D, 7E et 7F montrent les coupes obtenues avec des échantillons dont la composition correspond à la composition n° 5 décrite dans le tableau 1 (4 % Mg ; 1,5 % Zr - 2 % Ni), respectivement pour les puissances 250 W, 300 W, 350 W, 400 W, 450 W, 500 W.

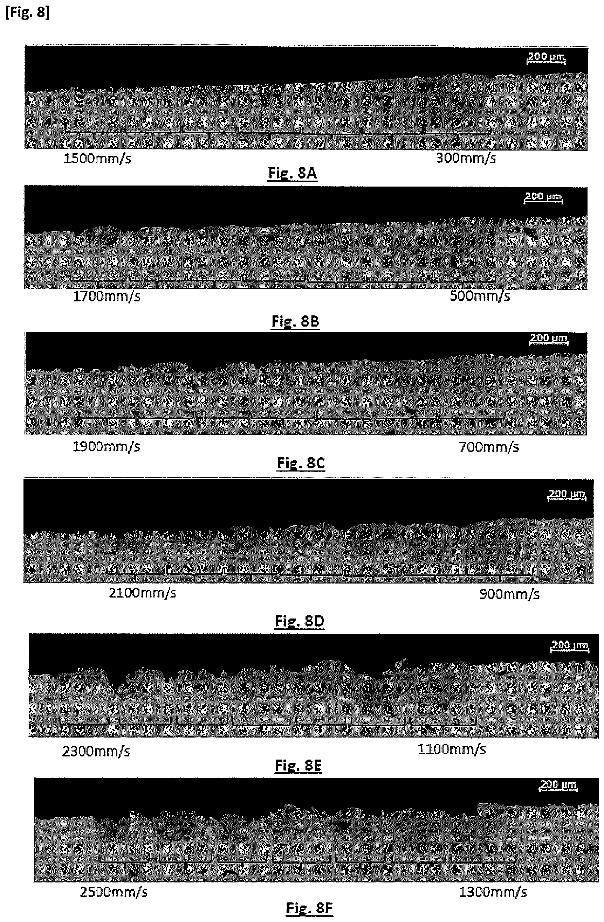

Les figures 8A, 8B, 8C, 8D, 8E et 8F montrent les coupes obtenues avec des échantillons dont la composition correspond à la composition n°3 décrite dans le tableau 1 (4 % Mg ; 1,5 % Zr - 2 % Fe), respectivement pour les puissances 250 W, 300 W, 350 W, 400 W, 450 W, 500 W.

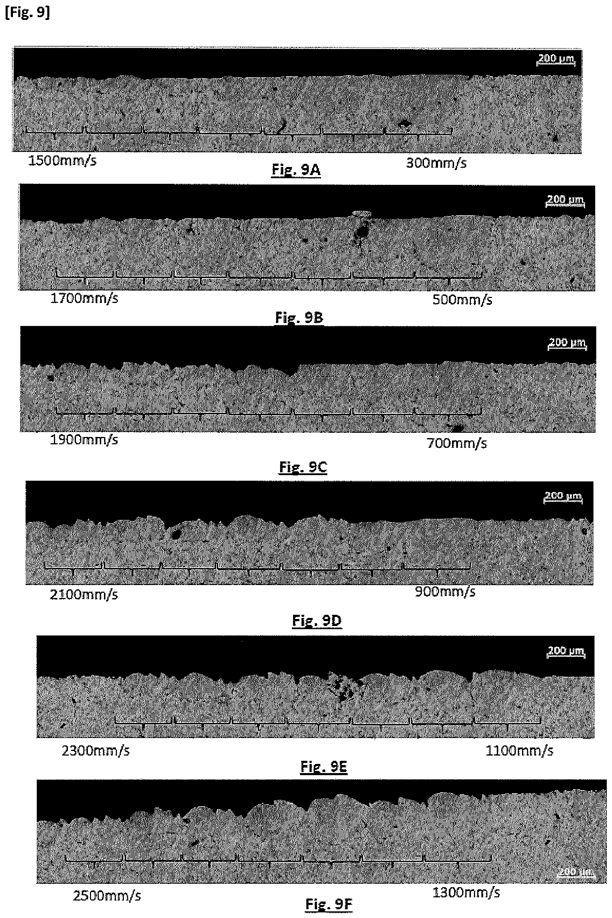

Les figures 9A, 9B, 9C, 9D, 9E et 9F montrent les coupes obtenues avec des échantillons dont la composition correspond à la composition n°6 décrite dans le tableau 1 (4 % Mg ; 1,5 % Zr - 2 % Mn), respectivement pour les puissances 250 W, 300 W, 350 W, 400 W, 450 W, 500 W.

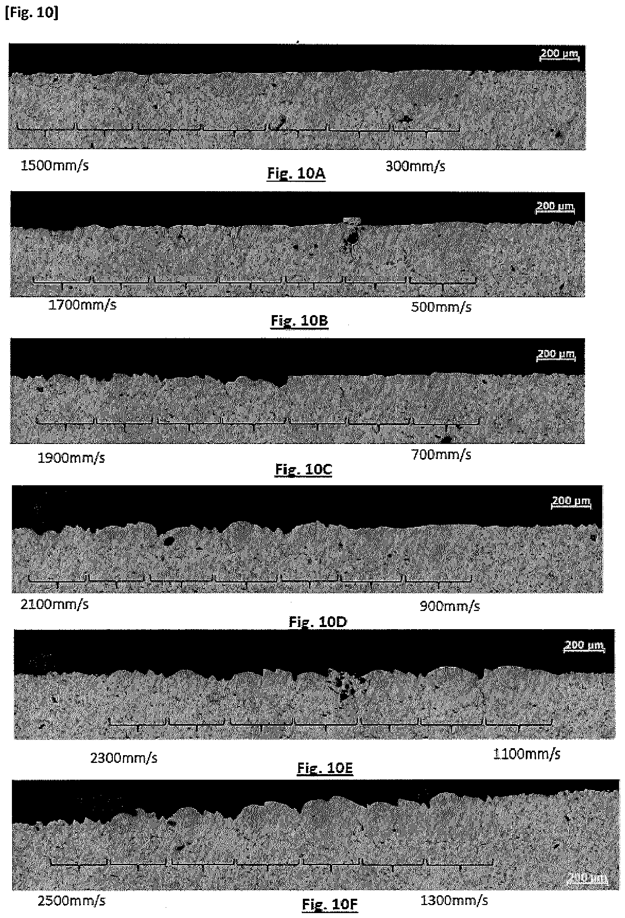

Les figures 10A, 10B, 10C, 10D, 10E et 10F montrent les coupes obtenues avec des échantillons dont la composition correspond à la composition n° 9 décrite dans le tableau 1 (4 % Mg ; 1,5 % Zr - 2 % La), respectivement pour les puissances 250 W, 300 W, 350 W, 400 W, 450 W, 500 W.

Les compositions ayant fait l'objet des essais reportés sur les figures 6 à 10 correspondent à celles donnant lieu à des valeurs de dureté les plus favorables au cours de la première série d'essais. On observe que ces compositions permettent d'obtenir un état de surface plus lisse, et moins poreux, que la composition de référence. Elles sont donc mieux adaptées à être mises en oeuvre dans un procédé de fabrication additive. De plus, ces compositions permettent d'obtenir des états de surface satisfaisants à forte vitesse et forte puissance. Elles conviennent particulièrement à une mise en oeuvre d'un procédé de fabrication additive avec des taux de dépose (build rate en anglais) élevés.

### Essais 3

Des pièces de test ont été réalisées par SLM, en utilisant un alliage 11, dont la composition massique mesurée par ICP comportait: Al; Zr 1,64 % ; Fe 2.12% ; Mg 2.56% ; impuretés : < 0,05 % chacune avec un cumul d'impuretés < 0,15 %.

Ces essais ont été réalisés en utilisant une machine de type EOS290 SLM (fournisseur EOS).

Cette machine permet une chauffe du plateau jusqu' à une température de 200°C. Les essais ont été réalisés à une température de chauffe de 200°C mais des essais complémentaires ont montré la bonne processabilité des alliages selon la présente invention à des températures de chauffe plus faibles, par exemple 25°C, 50°C, 100°C ou 150°C.

La puissance du laser était de 370 W. La vitesse de balayage était égale à 1250 mm/s. L'écart entre deux lignes adjacentes de balayage, usuellement désigné par le terme "écart vecteur" était de 0,111 mm. L'épaisseur de couche était de 60 µm.

La poudre utilisée présentait une taille de particule essentiellement comprise de 3 µm à 100 µm, avec une médiane de 38 µm, un fractile à 10 % de 14 µm et un fractile à 90 % de 78 µm.

Les pièces de test ont été réalisées, sous la forme de cylindres pleins verticaux (direction Z) par rapport au plateau de construction qui en forme la base dans le plan (X-Y). Les cylindres avaient un diamètre de 11 mm et une hauteur de 46 mm. Toutes les pièces ont subi un traitement de détente post-fabrication SLM de 4 heures à 300°C.

Certaines pièces ont subi un traitement thermique post fabrication à 400°C pour une durée de traitement comprise entre 1 h à 4 h. Toutes les pièces (avec et sans traitement thermique post-fabrication) ont été usinées pour obtenir des éprouvettes de traction cylindriques ayant les caractéristiques suivantes en mm (voir Tableau 3 et Figure 12) :
Dans la Figure 12 et le Tableau 3, Ø représente le diamètre de la partie centrale de l'éprouvette, M la largeur des deux extrémités de l'éprouvette, LT la longueur totale de l'éprouvette, R le rayon de courbure entre la partie centrale et les extrémités de l'éprouvette, Le la longueur de la partie centrale de l'éprouvette et F la longueur des deux extrémités de l'éprouvette.

**[Tableau 3]**

| **Type** | **Ø** | **M** | **LT** | **R** | **Le** | **F** |
|---|---|---|---|---|---|---|
| TOR4 | 4 | 8 | 45 | 3 | 22 | 8,7 |

Ces éprouvettes cylindriques ont été testées en traction à température ambiante dans la direction de fabrication Z selon la norme NF EN ISO 6892-1 (2009-10).

Le Tableau 4 ci-après synthétise les propriétés en traction (limite d'élasticité, résistance à la traction et allongement à la rupture) en fonction des conditions du traitement thermique post fabrication (durée, température).

**[Tableau 4]**

| **Durée (h)** | **Température (°C)** | **Rp0.2 (MPa)** | **Rm (MPa)** | **A (%)** |
|---|---|---|---|---|
| 0 | - | 303 | 369 | 15.6 |
| 1 | 400 | 455 | 457 | 6.1 |
| 4 | 400 | 474 | 475 | 5.2 |

### Essais 4

Un quatrième essai similaire à l'essai 3 a été réalisé en utilisant l'alliage 4 dont la composition massique mesurée par ICP comportait Al ; Zr 1,3 % ; Mn 4.47% ; Mg 2.53% ; impuretés : < 0,05 % chacune avec un cumul d'impuretés < 0,15 %.

La poudre utilisée présentait une taille de particules essentiellement comprise de 3 µm à 100 µm, avec une médiane de 40 µm, un fractile à 10 % de 14 µm et un fractile à 90 % de 84 µm. Le Tableau 5 ci-après synthétise les propriétés en traction (limite d'élasticité, résistance à la traction et allongement à la rupture) en fonction des conditions du traitement thermique post fabrication (durée, température).

**[Tableau 5]**

| **Durée (h)** | **Température (°C)** | **Rp0.2 (MPa)** | **Rm (MPa)** | **A (%)** |
|---|---|---|---|---|
| 0 | - | 372 | 445 | 6.9 |
| 1 | 400 | 424 | 488 | 3.8 |
| 4 | 400 | 435.5 | 500 | 3.75 |

### Essais 5

Un cinquième essai similaire aux essais 3 et 4 a été réalisé en utilisant l'alliage 5 dont la composition massique mesurée par ICP comportait Al ; Zr 1,13 % ; Mn 4.45% ; Mg 1.09% ; impuretés : < 0,05 % chacune avec un cumul d'impuretés < 0,15 %.

La poudre utilisée présentait une taille de particules essentiellement comprise de 3 µm à 100 µm, avec une médiane de 25 µm, un fractile à 10 % de 9.6 µm et un fractile à 90 % de 52 µm.

**[Tableau 6]**

| **Durée (h)** | **Température (°C)** | **Rp0.2 (MPa)** | **Rm (MPa)** | **A (%)** |
|---|---|---|---|---|
| 0 | - | 314.5 | 376 | 11.6 |
| 1 | 400 | 393 | 440 | 5.7 |
| 4 | 400 | 391 | 442 | 5.1 |

Bien que décrites en lien avec un procédé de fabrication additive de type SLM, qui correspond au procédé préféré, les compositions précédemment décrites peuvent être utilisées dans d'autres types d'essais.

La figure 11 représente un dispositif de fabrication additive de type WAAM, évoqué en lien avec l'art antérieur. Une source d'énergie 31, en l'occurrence une torche, forme un arc électrique 32. Dans ce dispositif, la torche 31 est maintenue par un robot de soudage 33. La pièce à fabriquer est disposée sur un support 10. Dans cet exemple, la pièce fabriquée est un mur s'étendant selon un axe transversal Z perpendiculairement à un plan longitudinal XY défini par le support 10. Sous l'effet de l'arc électrique 32, un fil d'apport 35 entre en fusion pour former un cordon de soudure. Le robot de soudage est commandé par un modèle numérique M. Le fil d'apport est déplacé de façon à former différentes couches 20₁...20ₙ, empilées les unes sur les autres, formant le mur 20, chaque couche correspondant à un cordon de soudure. Chaque couche 20₁...20ₙ s'étend dans le plan longitudinal XY, selon un motif défini par le modèle numérique M.

Le diamètre du fil d'apport est de préférence inférieur à 3 mm. Il peut être de 0,5 mm à 3 mm et est de préférence de 0,5 mm à 2 mm, voire de 1 mm à 2 mm. Il est par exemple de 1,2 mm.

D'autres procédés de fabrication sont par ailleurs envisageables, par exemple, et de façon non limitative :
- frittage sélectif par laser (Selective Laser Sintering ou SLS) ;
- frittage direct du métal par laser (Direct Metal Laser Sintering ou DMLS) ;
- frittage sélectif par chauffage (Selective Heat Sintering ou SHS) ;
- fusion par faisceau d'électrons (Electron Beam Melting ou EBM) ;
- dépôt direct par apport d'énergie (Direct Energy Déposition ou DED) ;
- dépôt direct de métal (Direct Metal Deposition ou DMD) ;
- dépôt direct par laser (Direct Laser Déposition ou DLD) ;
- technologie de dépôt par Laser (Laser Déposition Technology) ;
- ingénierie de formes nettes par laser (Laser Engineering Net Shaping) ;
- technologie de plaquage par laser (Laser Cladding Technology) ;
- technologie de fabrication de formes libres par laser (Laser Freeform Manufacturing Technology ou LFMT) ;
- dépôt par fusion laser (Laser Metal Deposition ou LMD) ;
- pulvérisation à froid (Cold Spray Consolidation ou CSC) ;
- fabrication additive par friction (Additive Friction Stir ou AFS) ;
- frittage par étincelle au plasma ou frittage flash (Field Assisted Sintering Technology, FAST ou spark plasma sintering) ;
- soudage par friction rotative (Inertia Rotary Friction Welding ou IRFW).

## Revendications

1. Procédé de fabrication d'une pièce comportant une formation de couches métalliques successives (20₁,....20ₙ), superposées les unes aux autres, chaque couche étant formée par le dépôt d'un métal d'apport (15, 35), le métal d'apport étant soumis à un apport d'énergie de façon à entrer en fusion et à constituer, en se solidifiant, ladite couche, le procédé étant **caractérisé en ce que** le métal d'apport (15, 35) est un alliage d'aluminium comportant les éléments d'alliage suivant, en pourcentages massiques :
- Mg : 0 % - 6 % ;
- Zr : 0,7 % - 2,5 %, de préférence selon une première variante > 1 % et ≤ 2,5 % ; ou de préférence selon une deuxième variante 0,7 - 2 % ; voire 0,7 - 1,6 % ; voire 0,7 - 1,4 % ; voire 0,8 - 1,4 % ; voire 0,8 - 1,2 % ;
- au moins un élément d'alliage choisi parmi Fe, Cu, Mn, Ni et/ou La : au moins 0,1 %, de préférence au moins 0,25 %, plus préférentiellement au moins 0,5 % par élément ;
- optionnellement au moins un autre élément d'alliage, choisi parmi : Si, Hf, V, Cr, Ta, Nb, W, Ti, Y, Yb, Ce, Co, Mo, Nd et/ou Er, la teneur de l'autre élément d'alliage ou de chaque autre élément d'alliage étant de 0,05 à 5 % ;
- optionnellement d'autres éléments choisis parmi Sr, Ba, Sb, Bi, Ca, P, B, In, Sn, selon une fraction massique inférieure ou égale à 1 % pour chaque élément, et de préférence selon une fraction massique totale inférieure à 2 % ;
- optionnellement d'autres éléments tels que :
∘ Ag, selon une fraction massique de 0,06 à 1 % ;
∘ et/ou Li, selon une fraction massique de 0,06 à 2 % ;
∘ et/ou Zn, selon une fraction massique de 0,05 à 5% ;
- impuretés : < 0,05 % individuellement, et de préférence < 0,15 % au total ;
- reste aluminium.

2. Procédé selon la revendication 1, dans lequel l'alliage d'aluminium comporte de 0,2 à 6 %, de préférence de 1 à 5 %, préférentiellement de 2 à 5 %, plus préférentiellement de 3 à 5 %, encore plus préférentiellement de 3,5 à 5 % en masse de Mg.

3. Procédé selon la revendication 1, dans lequel l'alliage d'aluminium comporte une teneur en Mg inférieure à 3,5 %, de préférence inférieure à 3 %, préférentiellement inférieure à 2 %, plus préférentiellement inférieure à 1 %, encore plus préférentiellement inférieure à 0,05 % en masse.

4. Procédé selon l'une quelconque des revendications précédentes, dans lequel l'alliage d'aluminium comporte une teneur dudit autre élément d'alliage ou de chaque autre élément d'alliage, choisi parmi : Si, Hf, V, Cr, Ta, Nb, W, Ti, Y, Yb, Ce, Co, Mo, Nd et/ou Er, de 0,1 à 3 %, ou de 0,1 à 2 %, ou de 0,1 à 1 %, ou de 0,1 à 0,5 %.

5. Procédé selon l'une quelconque des revendications précédentes, dans lequel le procédé comporte, après la formation des couches, c'est-à-dire après la formation de la pièce finale, une application d'au moins un traitement thermique, la température du traitement thermique étant de préférence de 300°C à 600 °C.

6. Procédé selon l'une quelconque des revendications précédentes, ne comportant pas de traitement thermique de type trempe suite à la formation des couches, c'est-à-dire suite à la formation de la pièce finale.

7. Procédé selon l'une quelconque des revendications précédentes, dans lequel le métal d'apport prend la forme d'une poudre (15), dont l'exposition à un faisceau de lumière (12) ou de particules chargées résulte en une fusion localisée suivie d'une solidification, de façon à former une couche solide (20₁...20ₙ).

8. Procédé selon l'une quelconque des revendications 1 à 6, dans lequel le métal d'apport est issu d'un fil d'apport (35), dont l'exposition à une source de chaleur (32) résulte en une fusion localisée suivie d'une solidification, de façon à former une couche solide (20₁...20ₙ).

9. Pièce obtenue par un procédé objet de l'une quelconque des revendications précédentes.

10. Poudre, destinée à être utilisée en tant que matériau d'apport d'un procédé de fabrication additive, la poudre étant destinée à être chauffée, de façon à former, sous l'effet du chauffage, une couche, la couche résultant d'une fusion suivie d'une solidification, la poudre comportant des particules en alliage d'aluminium, la poudre étant **caractérisée en ce que** l'alliage d'aluminium comporte les éléments d'alliage suivant, en pourcentages massiques :
- Mg : 0 % - 6 % ;
- Zr : 0,7 % - 2,5 %, de préférence selon une première variante > 1 % et ≤ 2,5 % ; ou de préférence selon une deuxième variante 0,7 - 2 % ; voire 0,7 - 1,6 % ; voire 0,7 - 1,4 % ; voire 0,8 - 1,4 % ; voire 0,8 - 1,2 % ;
- au moins un élément d'alliage choisi parmi Fe, Cu, Mn, Ni et/ou La : au moins 0,1 %, de préférence au moins 0,25 %, plus préférentiellement au moins 0,5 % par élément ;
- optionnellement au moins un autre élément d'alliage, choisi parmi : Si, Hf, V, Cr, Ta, Nb, W, Ti, Y, Yb, Ce, Co, Mo, Nd et/ou Er, la teneur de l'autre élément d'alliage ou de chaque autre élément d'alliage étant de 0,05 à 5 % ;
- optionnellement d'autres éléments choisis parmi Sr, Ba, Sb, Bi, Ca, P, B, In, Sn, selon une fraction massique inférieure ou égale à 1 % pour chaque élément, et de préférence selon une fraction massique totale inférieure à 2 % ;
- optionnellement d'autres éléments tels que :
∘ Ag, selon une fraction massique de 0,06 à 1 % ;
∘ et/ou Li, selon une fraction massique de 0,06 à 2 % ;
∘ et/ou Zn, selon une fraction massique de 0,05 à 5% ;
- impuretés : < 0,05% individuellement, et de préférence < 0,15 % au total ;
- reste aluminium.

11. Fil d'apport, destiné à être utilisé en tant que matériau d'apport d'un procédé de fabrication additive, **caractérisé en ce qu'**il est constitué d'un alliage d'aluminium comportant les éléments d'alliage suivant, en pourcentages massiques :
- Mg : 0 % - 6 % ;
- Zr : 0,7 % - 2,5 %, de préférence selon une première variante > 1 % et ≤ 2,5 % ; ou de préférence selon une deuxième variante 0,7 - 2 % ; voire 0,7 - 1,6 % ; voire 0,7 - 1,4 % ; voire 0,8 - 1,4 % ; voire 0,8 - 1,2 % ;
- au moins un élément d'alliage choisi parmi Fe, Cu, Mn, Ni et/ou La : au moins 0,1 %, de préférence au moins 0,25 %, plus préférentiellement au moins 0,5 % par élément ;
- optionnellement au moins un autre élément d'alliage, choisi parmi : Si, Hf, V, Cr, Ta, Nb, W, Ti, Y, Yb, Ce, Co, Mo, Nd et/ou Er, la teneur de l'autre élément d'alliage ou de chaque autre élément d'alliage étant de 0,05 à 5 % ;
- optionnellement d'autres éléments choisis parmi Sr, Ba, Sb, Bi, Ca, P, B, In, Sn, selon une fraction massique inférieure ou égale à 1 % pour chaque élément, et de préférence selon une fraction massique totale inférieure à 2 % ;
- optionnellement d'autres éléments tels que :
∘ Ag, selon une fraction massique de 0,06 à 1 % ;
∘ et/ou Li, selon une fraction massique de 0,06 à 2 % ;
∘ et/ou Zn, selon une fraction massique de 0,05 à 5% ;
- impuretés : < 0,05% individuellement, et de préférence < 0,15 % au total ;
- reste aluminium.

12. Utilisation d'une poudre selon la revendication 10 ou d'un fil d'apport selon la revendication 11, dans un procédé de fabrication choisi parmi : la pulvérisation à froid (CSC), le dépôt par fusion laser (LMD), la fabrication additive par friction (AFS), le frittage par étincelle au plasma (FAST) ou le soudage par friction rotative (IRFW), de préférence la pulvérisation à froid (CSC).

## Patentansprüche

1. Verfahren zur Herstellung eines Werkstücks, das ein Gebilde aus aufeinanderfolgenden, übereinanderliegenden Metallschichten (20₁, ..., 20ₙ) umfasst, wobei jede Schicht durch das Auftragen eines Zusatzmetalls (15, 35) gebildet wird, wobei das Zusatzmetall einer Energiezufuhr ausgesetzt wird, sodass es beginnt, zu schmelzen und, wenn es erstarrt, die Schicht bildet, wobei das Verfahren **dadurch gekennzeichnet ist, dass** das Zusatzmetall (15, 35) eine Aluminiumlegierung ist, die die folgenden Legierungselemente, in Massenprozent, umfasst:
- Mg: 0 % - 6 %;
- Zr: 0,7 % - 2,5 %, vorzugsweise gemäß einer ersten Variante > 1 % und ≤ 2,5 %; oder vorzugsweise gemäß einer zweiten Variante 0,7 - 2 %; oder 0,7 - 1,6 %; oder 0,7 - 1,4 %; oder 0,8 - 1,4 %; oder 0,8 - 1,2 %;
- mindestens ein Legierungselement, ausgewählt aus Fe, Cu, Mn, Ni und/oder La: mindestens 0,1 %, vorzugsweise mindestens 0,25 %, bevorzugter mindestens 0,5 % pro Element;
- gegebenenfalls mindestens ein weiteres Legierungselement, ausgewählt aus: Si, Hf, V, Cr, Ta, Nb, W, Ti, Y, Yb, Ce, Co, Mo, Nd und/oder Er, wobei der Gehalt des weiteren Legierungselements oder jedes weiteren Legierungselements 0,05 bis 5 % beträgt;
- gegebenenfalls weitere Elemente, ausgewählt aus Sr, Ba, Sb, Bi, Ca, P, B, In, Sn, in einem Massenanteil von kleiner oder gleich 1 % für jedes Element, und vorzugsweise in einem Gesamt-Massenanteil von kleiner als 2 %;
- gegebenenfalls weitere Elemente, wie etwa:
∘ Ag, in einem Massenanteil von 0,06 bis 1 %;
∘ und/oder Li, in einem Massenanteil von 0,06 bis 2 %;
∘ und/oder Zn, in einem Massenanteil von 0,05 bis 5 %;
- Verunreinigungen: jeweils < 0,05 %, und vorzugsweise insgesamt < 0,15 %;
- der Rest Aluminium.

2. Verfahren nach Anspruch 1, wobei die Aluminiumlegierung 0,2 bis 6 Massen-%, vorzugsweise 1 bis 5 Massen-%, bevorzugt 2 bis 5 Massen-%, bevorzugter 3 bis 5 Massen-%, noch bevorzugter 3,5 bis 5 Massen-% Mg umfasst.

3. Verfahren nach Anspruch 1, wobei die Aluminiumlegierung einen Mg-Gehalt von kleiner als 3,5 Massen-%, vorzugsweise kleiner als 3 Massen-%, bevorzugt kleiner als 2 Massen-%, bevorzugter kleiner als 1 Massen-%, noch bevorzugter kleiner als 0,05 Massen-% umfasst.

4. Verfahren nach einem der vorstehenden Ansprüche, wobei die Aluminiumlegierung einen Gehalt des weiteren Legierungselements oder jedes weiteren Legierungselements, ausgewählt aus: Si, Hf, V, Cr, Ta, Nb, W, Ti, Y, Yb, Ce, Co, Mo, Nd und/oder Er, von 0,1 bis 3 %, oder von 0,1 bis 2 %, oder von 0,1 bis 1 %, oder von 0,1 bis 0,5 % umfasst.

5. Verfahren nach einem der vorstehenden Ansprüche, wobei das Verfahren nach dem Bilden der Schichten, d. h. nach dem Bilden des fertigen Werkstücks, ein Anwenden mindestens einer Wärmebehandlung umfasst, wobei die Temperatur der Wärmebehandlung vorzugsweise 300 °C bis 600 °C beträgt.

6. Verfahren nach einem der vorstehenden Ansprüche, das keine Wärmebehandlung vom Typ Abschrecken im Anschluss an das Bilden der Schichten, d. h. im Anschluss an das Bilden des fertigen Werkstücks, umfasst.

7. Verfahren nach einem der vorstehenden Ansprüche, wobei das Zusatzmetall die Form eines Pulvers (15) annimmt, dessen Exposition gegenüber einem Lichtstrahl (12) oder einem Strahl geladener Teilchen zu einem lokalen Schmelzen, gefolgt von einem Erstarren, führt, sodass eine feste Schicht (20₁...20ₙ) gebildet wird.

8. Verfahren nach einem der Ansprüche 1 bis 6, wobei das Zusatzmetall aus einem Schweißdraht (35) stammt, dessen Exposition gegenüber einer Wärmequelle (32) zu einem lokalen Schmelzen, gefolgt von einem Erstarren, führt, sodass eine feste Schicht (20₁...20ₙ) gebildet wird.

9. Werkstück, das über ein Verfahren nach einem der vorstehenden Ansprüche erhalten wird.

10. Pulver, das dazu bestimmt ist, als Zusatzwerkstoff für ein additives Fertigungsverfahren verwendet zu werden, wobei das Pulver dazu bestimmt ist, erhitzt zu werden, sodass unter der Wirkung der Erhitzung eine Schicht gebildet wird, wobei die Schicht durch ein Schmelzen, gefolgt von einem Erstarren, entsteht, wobei das Pulver Teilchen aus Aluminiumlegierung umfasst, wobei das Pulver **dadurch gekennzeichnet ist, dass** die Aluminiumlegierung die folgenden Legierungselemente, in Massenprozent, umfasst:
- Mg: 0 % - 6 %;
- Zr: 0,7 % - 2,5 %, vorzugsweise gemäß einer ersten Variante > 1 % und ≤ 2,5 %; oder vorzugsweise gemäß einer zweiten Variante 0,7 - 2 %; oder 0,7 - 1,6 %; oder 0,7 - 1,4 %; oder 0,8 - 1,4 %; oder 0,8 - 1,2 %;
- mindestens ein Legierungselement, ausgewählt aus Fe, Cu, Mn, Ni und/oder La: mindestens 0,1 %, vorzugsweise mindestens 0,25 %, bevorzugter mindestens 0,5 % pro Element;
- gegebenenfalls mindestens ein weiteres Legierungselement, ausgewählt aus: Si, Hf, V, Cr, Ta, Nb, W, Ti, Y, Yb, Ce, Co, Mo, Nd und/oder Er, wobei der Gehalt des weiteren Legierungselements oder jedes weiteren Legierungselements 0,05 bis 5 % beträgt;
- gegebenenfalls weitere Elemente, ausgewählt aus Sr, Ba, Sb, Bi, Ca, P, B, In, Sn, in einem Massenanteil von kleiner oder gleich 1 % für jedes Element, und vorzugsweise in einem Gesamt-Massenanteil von kleiner als 2 %;
- gegebenenfalls weitere Elemente, wie etwa:
∘ Ag, in einem Massenanteil von 0,06 bis 1 %;
∘ und/oder Li, in einem Massenanteil von 0,06 bis 2 %;
∘ und/oder Zn, in einem Massenanteil von 0,05 bis 5 %;
- Verunreinigungen: jeweils < 0,05 %, und vorzugsweise insgesamt < 0,15 %;
- der Rest Aluminium.

11. Schweißdraht, der dazu bestimmt ist, als Zusatzwerkstoff für ein additives Fertigungsverfahren verwendet zu werden, **dadurch gekennzeichnet, dass** er aus einer Aluminiumlegierung besteht, die die folgenden Legierungselemente, in Massenprozent, umfasst:
- Mg: 0 % - 6 %;
- Zr: 0,7 % - 2,5 %, vorzugsweise gemäß einer ersten Variante > 1 % und ≤ 2,5 %; oder vorzugsweise gemäß einer zweiten Variante 0,7 - 2 %; oder 0,7 - 1,6 %; oder 0,7 - 1,4 %; oder 0,8 - 1,4 %; oder 0,8 - 1,2 %;
- mindestens ein Legierungselement, ausgewählt aus Fe, Cu, Mn, Ni und/oder La: mindestens 0,1 %, vorzugsweise mindestens 0,25 %, bevorzugter mindestens 0,5 % pro Element;
- gegebenenfalls mindestens ein weiteres Legierungselement, ausgewählt aus: Si, Hf, V, Cr, Ta, Nb, W, Ti, Y, Yb, Ce, Co, Mo, Nd und/oder Er, wobei der Gehalt des weiteren Legierungselements oder jedes weiteren Legierungselements 0,05 bis 5 % beträgt;
- gegebenenfalls weitere Elemente, ausgewählt aus Sr, Ba, Sb, Bi, Ca, P, B, In, Sn, in einem Massenanteil von kleiner oder gleich 1 % für jedes Element, und vorzugsweise in einem Gesamt-Massenanteil von kleiner als 2 %;
- gegebenenfalls weitere Elemente, wie etwa:
∘ Ag, in einem Massenanteil von 0,06 bis 1 %;
∘ und/oder Li, in einem Massenanteil von 0,06 bis 2 %;
∘ und/oder Zn, in einem Massenanteil von 0,05 bis 5 %;
- Verunreinigungen: jeweils < 0,05 %, und vorzugsweise insgesamt < 0,15 %;
- der Rest Aluminium.

12. Verwendung eines Pulvers nach Anspruch 10 oder eines Schweißdrahts nach Anspruch 11 in einem Herstellungsverfahren, ausgewählt aus: Kaltgasspritzen (CSC), Laserauftragschweißen (LMD), Additive Fertigung durch Reibung (AFS), Plasmafunkensintern (FAST) oder Rotationsreibschweißen (IRFW), vorzugsweise Kaltgasspritzen (CSC).

## Claims

1. A method for manufacturing a part including a formation of successive metallic layers (20₁,....20ₙ), superimposed on one another, each layer being formed by the deposition of a filler metal (15, 35), the filler metal being subjected to an energy supply so as to melt and constitute, when solidifying, said layer, the method being **characterized in that** the filler metal (15, 35) is an aluminum alloy including the following alloy elements, in weight percents:
- Mg: 0 % - 6 %;
- Zr: 0.7 % - 2.5 %, preferably according to a first variant > 1 % and ≤ 2.5 %; or preferably according to a second variant 0,7 - 2 %; and possibly 0.7 - 1.6 %; and possibly 0.7 - 1.4 %; and possibly 0.8 - 1.4 %; and possibly 0.8 - 1.2 %;
- at least one alloy element selected from Fe, Cu, Mn, Ni and/or La: at least 0.1 %, preferably at least 0.25 %, more preferably at least 0.5 % per element;
- optionally at least one other alloy element, selected from Si, Hf, V, Cr, Ta, Nb, W, Ti, Y, Yb, Ce, Co, Mo, Nd and/or Er, the content of the other alloy element or of each other alloy element being from 0.05 to 5 %;
- optionally other elements selected from Sr, Ba, Sb, Bi, Ca, P, B, In, Sn, according to a weight fraction lower than or equal to 1 % for each element, and preferably according to a total weight fraction lower than 2%,
- optionally other elements such as:
∘ Ag, according to a weight fraction from 0.06 to 1 %;
∘ and/or Li, according to a weight fraction from 0.06 to 2 %;
∘ and/or Zn, according to a weight fraction from 0.05 to 5%;
- impurities: < 0.05% individually, and preferably < 0.15 % all in all;
- rest aluminum.

2. The method according to claim 1, wherein the aluminum alloy includes from 0.2 to 6 %, preferably from 1 to 5 %, preferably from 2 to 5 %, more preferably from 3 to 5 %, still more preferably from 3.5 to 5 % by weight of Mg.

3. The method according to claim 1, wherein the aluminum alloy includes a Mg content lower than 3.5 %, preferably lower than 3 %, preferably lower than 2 %, more preferably lower than 1 %, still more preferably lower than 0.05 % by weight.

4. The method according to any one of the preceding claims, wherein the aluminum alloy includes the content of said other alloy element or of each other alloy element, selected from: Si, Hf, V, Cr, Ta, Nb, W, Ti, Y, Yb, Ce, Co, Mo, Nd and/or Er, from 0.1 to 3 %, or from 0.1 to 2 %, or from 0.1 to 1 %, or from 0.1 to 0.5 %.

5. The method according to any one of the preceding claims, wherein the method includes, after the formation of the layers, that is to say after the formation of the final part, an application of at least one heat treatment, the temperature of the heat treatment being preferably from 300°C to 600°C.

6. The method according to any one of the preceding claims, including no quenching-type heat treatment following the formation of the layers, that is to say following the formation of the final part.

7. The method according to any one of the preceding claims, wherein the filler metal is in the form of a powder (15), whose exposure to a beam of light (12) or of charged particles results in a local melting followed by a solidification, so as to form a solid layer (20₁...20ₙ).

8. The method according to any one of claims 1 to 6, wherein the filler metal is derived from a filler wire (35), whose exposure to a heat source (32) results in a local melting followed by a solidification, so as to form a solid layer (20₁...20ₙ).

9. A part obtained by a method object of any one of the preceding claims.

10. A powder, intended to be used as a filler material of an additive manufacturing method, the powder being intended to be heated, so as to form, under the effect of heating, a layer, the layer resulting from a melting followed by a solidification, the powder including aluminum alloy particles, the powder being **characterized in that** the aluminum alloy includes the following alloy elements, in weight percents:
- Mg: 0 % - 6 %;
- Zr: 0.7 % - 2.5 %, preferably according to a first variant > 1 % and ≤ 2.5 %; or preferably according to a second variant 0,7 - 2 %; and possibly 0.7 - 1.6 %; and possibly 0.7 - 1.4 %; and possibly 0.8 - 1.4 %; and possibly 0.8 - 1.2 %;
- at least one alloy element selected from Fe, Cu, Mn, Ni and/or La: at least 0.1 %, preferably at least 0.25 %, more preferably at least 0.5 % per element;
- optionally at least one other alloy element, selected from Si, Hf, V, Cr, Ta, Nb, W, Ti, Y, Yb, Ce, Co, Mo, Nd and/or Er, the content of the other alloy element or of each other alloy element being from 0.05 to 5 %;
- optionally other elements selected from Sr, Ba, Sb, Bi, Ca, P, B, In, Sn, according to a weight fraction lower than or equal to 1 % for each element, and preferably according to a total weight fraction lower than 2%,
- optionally other elements such as:
∘ Ag, according to a weight fraction from 0.06 to 1 %;
∘ and/or Li, according to a weight fraction from 0.06 to 2 %;
∘ and/or Zn, according to a weight fraction from 0.05 to 5%;
- impurities: < 0.05% individually, and preferably < 0.15 % all in all;
- rest aluminum.

11. A filler wire, intended to be used as a filler material of an additive manufacturing method, **characterized in that** it is constituted by an aluminum alloy including the following alloy elements, in weight percents:
- Mg: 0 % - 6 %;
- Zr: 0.7 % - 2.5 %, preferably according to a first variant > 1 % and ≤ 2.5 %; or preferably according to a second variant 0,7 - 2 %; and possibly 0.7 - 1.6 %; and possibly 0.7 - 1.4 %; and possibly 0.8 - 1.4 %; and possibly 0.8 - 1.2 %;
- at least one alloy element selected from Fe, Cu, Mn, Ni and/or La: at least 0.1 %, preferably at least 0.25 %, more preferably at least 0.5 % per element;
- optionally at least one other alloy element, selected from Si, Hf, V, Cr, Ta, Nb, W, Ti, Y, Yb, Ce, Co, Mo, Nd and/or Er, the content of the other alloy element or of each other alloy element being from 0.05 to 5 %;
- optionally other elements selected from Sr, Ba, Sb, Bi, Ca, P, B, In, Sn, according to a weight fraction lower than or equal to 1 % for each element, and preferably according to a total weight fraction lower than 2%,
- optionally other elements such as:
∘ Ag, according to a weight fraction from 0.06 to 1 %;
∘ and/or Li, according to a weight fraction from 0.06 to 2 %;
- and/or Zn, according to a weight fraction from 0.05 to 5%;
- impurities: < 0.05% individually, and preferably < 0.15 % all in all;
- rest aluminum.

12. A use of a powder according to claim 10 or of a filler wire according to claim 11, in a manufacturing method selected amongst: cold spray consolidation (CSC), laser metal deposition (LMD), additive friction stir (AFS), spark plasma sintering (FAST) or rotary friction welding (IRFW), preferably cold spray consolidation (CSC).
